# EUROPEAN PATENT APPLICATION

(11) **EP 4 648 473 A1**
(43) Date of publication of application: **12.11.2025**
(21) Application number: 23913995.9
(22) Date of filing: 04.01.2023
(51) Int. Cl.: H04W 28/02

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Gunzelmann, Rainer
(86) International application number: PCT/CN2023/070508
(87) International publication number: WO 2024/145836

(57) **Abstract**

Embodiments of the present disclosure provide an information transmission method and apparatus, a communication device, and a storage medium. The information transmission method executed by a user equipment (UE) includes: acquiring a sending parameter, wherein the sending parameter comprises a sending configuration provided by a network device, or a protocol-agreed parameter; and sending path information of the LTE according to the sending parameter.

## Description

### TECHNICAL FIELD

The present disclosure relates to, but is not limited to, the field of wireless communication technology, and in particular relates to a method and an apparatus for information transmission, a communication device, and a storage medium.

### BACKGROUND

In recent years, flight vehicles such as Unmanned Aerial Vehicles (UAVs, also known as 'drones') have become increasingly popular. Global interest in UAV-based services has increased dramatically, including a wide range of UAV operations, flight experiences for personal entertainment, cargo delivery, and more. As a basis for these services, remote control and data transmission capabilities are key aspects of enhancement, which are of interest to service providers/operators as well as UAV manufacturers.

According to relevant studies, the feasibility of UAV connectivity via terrestrial cellular systems and the required enhancements have been demonstrated; and LTE (Long Term Evolution) systems are enhanced accordingly in terms of UL (Uplink) and DL (Downlink) interference as well as mobility.

In NR (New Radio), the applications applicable to UAV are more diversified, and the terminal device for UAV has lower latency and transmission rate requirements, so for NR UAV, mobility enhancement is required on the basis of LTE UAV.

### SUMMARY

Embodiments of the present disclosure provide a method and an apparatus for information transmission, a communication device, and a storage medium.

A first aspect of embodiments of the present disclosure provides a method for information transmission, and the method is performed by a user equipment (UE) and includes:
obtaining a sending parameter, in which the sending parameter includes a sending configuration provided by a network device, or a protocol-agreed parameter; and
sending path information of the UE according to the sending parameter.

A second aspect of embodiments of the present disclosure provides a method for information transmission, and the method is performed by a network device and includes:
receiving path information of a user equipment (UE) sent by the UE according to a sending parameter, in which the sending parameter includes a sending configuration provided by the network device, or a protocol-agreed parameter.

A third aspect of embodiments of the present disclosure provides an apparatus for information transmission, and the apparatus is applied to a user equipment (UE) and includes:
an obtaining module configured to obtain a sending parameter, in which the sending parameter includes a sending configuration provided by a network device, or a protocol-agreed parameter; and
a sending module configured to send path information of the UE according to the sending parameter.

A fourth aspect of embodiments of the present disclosure provides an apparatus for information transmission, and the apparatus is applied to a network device and includes:
a receiving module configured to receive path information of a user equipment (UE) sent by the UE according to a sending parameter, in which the sending parameter includes a sending configuration provided by the network device, or a protocol-agreed parameter.

A fifth aspect of embodiments of the present disclosure provides a communication device including a processor, a memory, and an executable program stored in the memory and capable of being run by the processor, in which when running the executable program, the processor performs the method for information transmission provided by the first aspect or the second aspect.

A sixth aspect of embodiments of the present disclosure provides a computer storage medium storing an executable program that when run by a processor, causes the method for information transmission provided by the first aspect or the second aspect to be implemented.

In the technical solutions provided by embodiments of the present disclosure, the UE may send the path information of the UE according to the sending configuration provided by the network device or the protocol-specified parameter, which enables the path information sent by the UE to be more targeted, so that the path information of the UE received by the network device is the information required by the network device, and since the path information of the UE is validly usable for the network device, it enables the network device to use the path information of the UE well for the mobility management of the UE. In addition, since the path information sent by the UE is the information required by the network device, this reduces the transmission of unnecessary information, and thus the signaling overhead may be reduced.

It should be understood that, the forgoing general description and the detailed description hereinafter are only illustrative and explanatory, and cannot limit embodiments of the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of embodiments of the present disclosure together with the specification.
FIG. 1 is a schematic diagram of a wireless communication system illustrated according to an illustrative embodiment.
FIG. 2 is a flow chart of a method for information transmission illustrated according to an illustrative embodiment.
FIG. 3 is a flow chart of a method for information transmission illustrated according to an illustrative embodiment.
FIG. 4 is a flow chart of a method for information transmission illustrated according to an illustrative embodiment.
FIG. 5 is a flow chart of a method for information transmission illustrated according to an illustrative embodiment.
FIG. 6 is a block diagram of an apparatus for information transmission illustrated according to an illustrative embodiment.
FIG. 7 is a block diagram of an apparatus for information transmission illustrated according to an illustrative embodiment.
FIG. 8 is a block diagram of a UE illustrated according to an illustrative embodiment.
FIG. 9 is a block diagram of a communication device illustrated according to an illustrative embodiment.

### DETAILED DESCRIPTION

Illustrative embodiments are illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with embodiments of the present disclosure. On the contrary, they are merely examples of a device and a method consistent with some aspects of embodiments of the present disclosure.

The terms used in embodiments of the present disclosure are only for purpose of description of particular embodiments, and are not intended to limit embodiments of the present disclosure. The singular form "a", "the" and "this" used in the present disclosure is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, a first parameter may be referred to as a second parameter without departing from the scope of embodiments of the present disclosure, and similarly, the second parameter may also be referred to as the first parameter. Depending on the context, the word "if" used herein may be interpreted as "when...", "upon..." or "in response to determination".

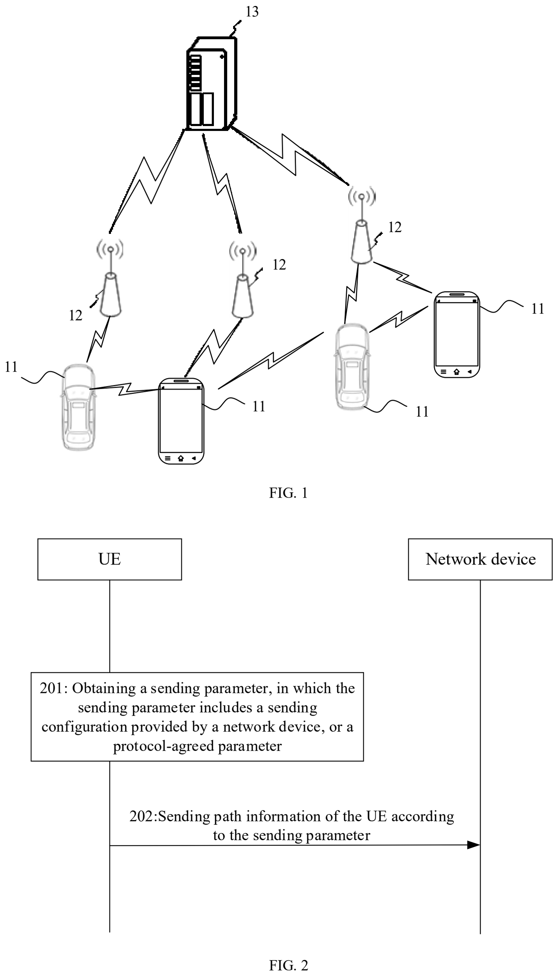

As illustrated in FIG. 1, which is a schematic diagram of a wireless communication system provided by an embodiment of the present disclosure. As illustrated in FIG. 1, the wireless communication system is a communication system based on cellular mobile communication technology, and the wireless communication system may include at least one UE 11 and at least two access network devices 12.

The UE 11 may be a device that provides voice and/or data connectivity to a user. The UE 11 may communicate with one or more core networks via a Radio Access Network (RAN) and, via the core networks, the UE may connect with external network devices such as the Internet and other UEs. The UE 11 may be an IoT UE, such as a sensor device, a mobile phone (or a "cellular" phone), and a computer having an IoT UE, which may be, for example, a stationary, portable, pocket-sized, hand-held, computer-built, or vehicle-mounted device. For example, a station (STA), subscriber unit, subscriber station, mobile station, mobile, remote station, access point, remote UE (remote terminal), access UE (access terminal), user terminal, user agent, user device, or user equipment (UE). Or, The UE 11 may also be a device of an unmanned aerial vehicle (UAV). Or, the UE 11 may be a vehicle-mounted device, e.g., it may be a vehicle computer with wireless communication capabilities, or a wireless communication device that is external to the vehicle computer. Or, the UE 11 may also be a roadside device, e.g., it may be a street light, a signal light, or other roadside device, etc., with wireless communication capabilities.

The access network device 12 may be a network-side device in a wireless communication system. The wireless communication system may be the 4th generation mobile communication (4G) system, also known as a Long Term Evolution (LTE) system; or, the wireless communication system may be a 5G system, also known as a new radio (NR) system or a 5G NR system. Or, the wireless communication system may be a further next-generation system of the 5G system. The access network in the 5G system can be called New Generation-Radio Access Network (NG-RAN). Or, a machine type communication (MTC) system.

The access network device 12 may be an evolved access device (eNB) used in the 4G system. Or, the access network device 12 may be an access device (gNB) with a centralized distributed architecture in the 5G system. When the access network device 12 has a centralized distributed architecture, it typically includes a centralized unit (CU) and at least two distributed units (DUs). The centralized unit is provided with protocol stacks for Packet Data Convergence Protocol (PDCP) layer, Radio Link Control (RLC) layer, and Media Access Control (MAC) layer; the distributed unit is provided with a physical (PHY) layer protocol stack, and the embodiments of the present disclosure do not limit the specific realization of the access network device 12.

A wireless connection may be established between the access network device 12 and the UE 11 via a radio air interface. In various embodiments, the radio air interface is a radio air interface based on a fourth generation mobile communication network technology (4G) standard; or, the radio air interface is a radio air interface based on a fifth generation mobile communication network technology (5G) standard, such as the radio air interface is a new radio; or, the radio air interface may be a radio air interface based on a further next generation mobile communication network technology standard based on 5G.

E2E (End to End) or D2D (device to device) connections can also be established between UEs 11. For example, V2V (vehicle to vehicle) communication, V2I (vehicle to infrastructure) communication and V2P (vehicle to pedestrian) communication, and other scenarios in Vehicle to Everything (V2X) communication.

The access network device 12 may be located in a communication system integrated with a satellite communication system and may provide connectivity services to the satellite, thus the satellite may be accessed into the core network. For example, the access network device 12 may be an access network device with satellite gateway functionality in a communication system, such as a gateway device, a ground station device, a non-terrestrial networks gateway/satellite gateway (NTN-Gateway) and the like.

The wireless communication system described above may further include a core network device 13. A number of access network devices 12 are each connected to the core network device 13.

By way of example, the core network device 13 may be a Mobility Management Entity (MME) in an Evolved Packet Core (EPC) network. Or, the core network device may also be an Enhanced Serving Mobile Location Centre (E-SMLC), etc.

By way of further example, the core network device 13 may be an access and mobility management function (AMF), a location management function (LMF), a gateway mobile location center (GMLC), and the like. The embodiments of the present disclosure do not limit the realization form of the core network device 13.

It should be noted that the network architecture illustrated in FIG. 1 is only an example of the application of embodiments of the present disclosure and does not constitute a limitation of the scope of application of embodiments of the present disclosure.

In order to facilitate understanding by those skilled in the art, a plurality of implementations are set forth in embodiments of the present disclosure to provide a clear explanation of the technical solutions of embodiments of the present disclosure. Of course, it can be understood by those skilled in the art that the plurality of embodiments provided by embodiments of the present disclosure may be performed alone, or may be performed in combination with the methods of the other embodiments in embodiments of the present disclosure, or may be performed alone or in combination with some of the methods in other related technologies, which is not limited by embodiments of the present disclosure.

For mobility enhancement, in LTE UAV, the UE can be requested to report a planned flight path to an evolved Node B (eNB) via a Radio Resource Control (RRC) message. More specifically, the UE may indicate a planned location of the UE in the future, and for the mobility of the UE, the eNB may combine the information to configure the mobility such as handover for the UE. e.g., according to the information, the eNB may be able to know in advance which cell is suitable for the UE to access in the future, and can be used as a target cell for the UE. The UAV flies according to a preconfigured path, and when the location of the UAV is close to an edge of the cell, or even before the UAV reaches the edge of the cell, the serving eNB may start to perform handover preparations with a neighboring target eNB, e.g., selecting a target eNB within a target eNB range at the next point of the flight path, forwarding a terminal context in advance, and preconfiguring a radio resource in the target eNB for the terminal, and then sending a handover command to the terminal under a high quality radio link condition. In this way, the chances of handover failure are greatly reduced when the UAV is performing a handover in the flight path.

In LTE UAV, based on request information from the network device, the UAV UE performs reporting of a flight path through UEInformationRequest information and UEInformationResponse information. When the UE receives the UEInformationRequest information sent by the network device, the UE sends flight path information to a network through the UEInformationResponse information in accordance with the request of the network device.

In the process of reporting the flight path, based on the request from the network device, the UE reports the flight path, but the request information from the network device can only instruct the UE to report the flight path information and whether or not the flight path information carries a timestamp. Therefore, how the UE reports the flight path depends on the UE implementation, which may result in not all the flight path information reported by the UE being useful. For the currently serving base station, it may be more interesting to know when the UE plans to leave a coverage area of the current base station and which are the possible target base stations. However, since the granularity and content of the currently reported flight path information is determined based on the UE implementation, it is possible that the reported flight path information is not well used for UE mobility management.

FIG. 2 is a flow chart of a method for information transmission illustrated according to an illustrative embodiment. The method for information transmission is performed by a UE, and as illustrated in FIG. 2, the method may include following steps.

In step 201: a sending parameter is obtained, and the sending parameter includes a sending configuration provided by a network device, or a protocol-agreed parameter.

In step 202: path information of the UE is sent according to the sending parameter.

In some examples, the UE may be a flying device and/or a mobile device moving on the ground. Here, the flying device may for example be an unmanned flying device. In other examples, the UE may also be a UE carried by a person travelling in a flight vehicle.

In some examples, the UE may be located on a UAV and may be integrated in the UAV, for example, the UE may provide a data connection for controlling the UAV or communicating with the UAV.

In some examples, the UE may be a payload of the UAV and perform functions separate from the UAV.

The aforementioned UAV may include any type of unmanned aerial vehicle. For example, the UAV may be an unmanned fixed-wing aircraft, an unmanned airship, an unmanned helicopter, or any other device capable of flight and subject to remote control.

In some examples, the network device may be a base station, e.g. the network device may be a gNB, an eNB, etc. The network device may also be any other network node capable of servicing the UE in the communication system, such as a wireless device or a machine type communication device.

In the present embodiment, the sending parameter is used for the UE to send the path information of the UE. The sending parameter may be the sending configuration provided by the network device, and may also be the protocol-agreed parameter.

In some examples, the sending parameter is used to determine waypoint information of a waypoint for the UE to plan to pass through needed to be reported.

In some examples, the sending configuration may include configuration information used to determine the path information of the UE needed to be reported. For example, the configuration information may include reference point information. In other examples, the configuration information may also include reference point information and a threshold.

In some examples, if the UE is a flying device, the path information is flight path information, and the path information indicates a flight path. For example, a flight path in three-dimensional space. If the UE is a ground mobile device, the path information is ground path information, and the path information indicates a ground movement path. The ground movement path includes, but is not limited to: road and/or rail traffic paths, etc.

In some examples, the path information of the UE may indicate a movement path or a waypoint in the movement path for the UE to plan to pass through.

The movement path for the UE to plan to pass through may include N waypoints; location information of the N waypoints is sequentially ordered and corresponds to the respective time information in one-to-one correspondence. If there are no unforeseen circumstances, the UE passes through the N waypoints in the planned movement path in sequence according to the planned time.

In some examples, the path information of the UE includes waypoint information of the waypoint for the UE to plan to pass through. Here, the UE may send the waypoint information of one or more waypoints in the movement path planned to pass through according to the sending parameter.

In some examples, the waypoint information of the waypoint for the UE to plan to pass through may represent a movement status for the UE to plan to pass through the waypoint.

By way of example, the waypoint information of one waypoint for the UE to plan to pass through may include, but is not limited to, at least one of:
a movement speed or a flight speed for the UE to plan to pass through the waypoint;
time information for the UE to plan to pass through the waypoint;
location information of the waypoint for the UE to plan to pass through; or
a waypoint index of the waypoint for the UE to plan to pass through.

In embodiments of the present disclosure, the path information includes at least time information and/or location information. The time information may be represented by a timestamp.

The timestamp may indicate an absolute time, or a time difference relative to a reference time. This reference time may be an absolute time.

The location information may include, but is not limited to, one or more of longitude information, latitude information, and altitude information. In some examples, the location information may also include elevation information.

In some examples, the location information may include absolute location information such as latitude and longitude, or relative location information relative to a reference point. The reference point can be any one of the preset locations. For example, the reference point may be the absolute location information of the UE at a starting moment of the movement, or an absolute location specified in a region such as the equator.

In some examples, if the UE receives the sending configuration provided by the network device, the UE may send the path information of the UE according to the sending configuration, and if the UE does not receive the sending configuration provided by the network device, the UE may send the path information of the UE according to the protocol-agreed parameter.

In some examples, in a case of receiving the sending configuration provided by the network device, the UE may send the path information of the UE according to the protocol-agreed parameter, or the UE may send the path information of the UE randomly according to one of the sending configuration provided by the network device and the protocol-agreed parameter.

In the present embodiment, the UE may use the sending configuration provided by the network device or the protocol-agreed parameter as the sending parameter, and send the path information of the UE to the network device according to the sending parameter. In this way, after the UE sends the path information to the network device, the network device may, according to the path information of the UE, perform operations such as cell handover preparations in advance before the location of the UE reaches certain cells, to realize fast and effective handover of the UE between different cells within the network. The cell here may include, but is not limited to, a terrestrial network (TN) cell and/or a non-terrestrial (NTN) cell. The network device may also configure an appropriate measurement configuration for the UE in advance according to the path information.

In embodiments of the present disclosure, the UE may send the path information of the UE according to the sending configuration provided by the network device or the protocol-specified parameter, which enables the path information sent by the UE to be more targeted, so that the path information of the UE received by the network device is the information required by the network device, and since the path information of the UE is validly usable for the network device, it enables the network device to use the path information of the UE well for the mobility management of the UE. In addition, since the path information sent by the UE is the information required by the network device, this reduces the transmission of unnecessary information, and thus the signaling overhead may be reduced.

In an embodiment, obtaining the sending parameter may include:
receiving request information sent by the network device, in which the request information includes the sending configuration.

The request information is used to request the UE to send the path information of the UE.

In some examples, the request information including the sending configuration may be received from the network device by means of an instruction. The instruction may be a physical layer instruction or a high-level instruction. The high-level instruction may be an RRC instruction or a MAC Control Element (CE).

In some examples, the UE may receive the request (UEInformationRequest) information including the sending configuration sent by the network device. Accordingly, the UE may send the path information of the UE to the network device through response (UEInformationResponse) information according to the sending configuration.

In some examples, when the UE is acting as a flying device, the UE may encapsulate the path information sent according to the sending parameter in a flight path report (FlightPathInfoReport) to be reported to the network device.

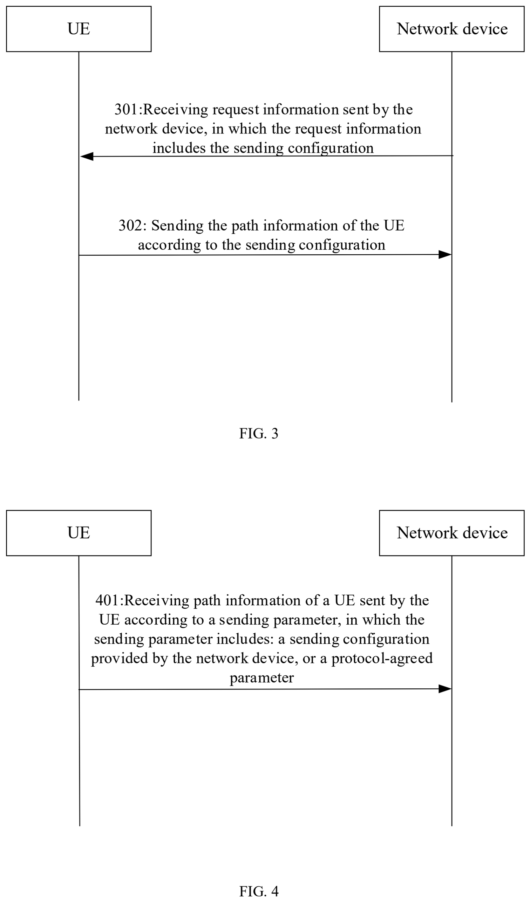

In an embodiment, as illustrated in FIG. 3, a method for information transmission is provided, the method for information transmission is performed by a UE, and the method may include following steps.

In step 301: request information sent by the network device is received, in which the request information includes the sending configuration.

In step 302: path information of the UE is sent according to the sending configuration.

In some examples, the sending configuration included in the request information is used to configure one or more alternative reference points.

In the present embodiment, the network device may send the request information to the UE to request the UE to report the path information, and the sending configuration carried in the request information is used to configure one or more alternative reference points. In this way, the network device configures one or more alternative reference points for the UE, and the UE may report the waypoint information of the waypoint planned to pass through and closest to the location of the alternative reference point, such as time information and/or location information of the waypoint having the shortest distance from the alternative reference point.

In other examples, the sending configuration included in the request information is used to configure one or more alternative reference points and a threshold corresponding to each alternative reference point.

In the present embodiment, the network device may send the request information to the UE, to request the UE to report the path information, the sending configuration carried in the request information is used to configure one or more alternative reference points and the threshold corresponding to each alternative reference point, and the UE may determine when a distance of which waypoint in the movement path of the UE from the alternative reference point meets the requirement of the threshold (e.g., the distance is less than or equal to the threshold), and report to the network device and/or the reported path information includes only the waypoint information satisfying the requirement of the threshold, such as time information and/or location information of the waypoint having the distance from the alternative reference point satisfying the requirement of the threshold.

In an embodiment, the sending configuration includes:
location indication information of one or more alternative reference points.

The location indication information of the alternative reference point may be used to indicate the location of the alternative reference point.

By way of example, the location indication information of the alternative reference point may indicate that the alternative reference point is a current serving cell of the UE. Or, the location indication information of the alternative reference point may indicate that the alternative reference point is a neighboring cell of a current serving cell of the UE.

In some examples, the location indication information of the alternative reference point includes at least one of:
an index of the alternative reference point;
a cell identifier of the alternative reference point configured to indicate a cell corresponding to the alternative reference point, in which the cell is a current serving cell, a neighboring cell of the current serving cell, or a specific cell of the UE; or
absolute location information of the alternative reference point.

In some examples, the index of the alternative reference point may be numbering of the alternative reference point, which may for example be a digital numbering.

The cell identifier of the alternative reference point may be used to identify the cell corresponding to the alternative reference point. In some examples, the cell corresponding to the alternative reference point may include a serving cell or a neighboring cell or a specific cell of the UE.

In some examples, the absolute location information of the alternative reference point may include an absolute longitude and an absolute latitude of the alternative reference point.

In some examples, the absolute location information of the alternative reference point may also include an absolute altitude of the alternative reference point.

In the present embodiment, the sending configuration provided to the UE by the network device includes the location indication information of the one or more alternative reference points, such that the UE may send path information of the UE according to a location indicated by the location indication information of the one or more alternative reference points.

By way of example, the UE may determine a location of the one or more alternative reference points according to the location indication information of the one or more alternative reference points, and send the waypoint information of the waypoint in the movement path of the UE having the shortest distance from the location of each alternative reference point.

In an embodiment, the path information includes waypoint information of one or more first waypoints, and the first waypoint is a waypoint having a shortest distance from a target reference point among one or more waypoints for the UE to plan to pass through, in which the target reference point is one of the alternative reference points.

In some examples, there may be one or more target reference points having the shortest distance from the first waypoint. For example, among the waypoints for the UE to plan to pass through, if a waypoint is located between two alternative reference points and the waypoint has the shortest distance from each of the two alternative reference points, the waypoint may be determined to be the first waypoint.

In other examples, there may be one or more first waypoints having the shortest distance from the same target reference point. For example, among the waypoints for the UE to plan to pass through, if an alternative reference point is located between two waypoints and the alternative reference point has the shortest distance from each of the two waypoints, then the alternative reference point is used as the target reference point, and the two waypoints are determined to be the first waypoints.

By way of example, the distance between the waypoint for the UE to plan to pass through and the alternative reference point is a distance in three-dimensional space.

In the present embodiment, the UE may, for each alternative reference point indicated by the sending configuration, take the waypoint having the shortest distance from the alternative reference point as the first waypoint, and send path information including the waypoint information of the first waypoint.

In an embodiment, the waypoint information of the first waypoint includes at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

In some examples, the time information may be absolute time information (AbsoluteTimeInfo).

Information Element (IE) AbsoluteTimeInfo is absolute time in the format YY-MM-DD HH:MM:SS with BCD (Binary Coded Decimal) encoding. The first or the leftmost bit of the bit string is the highest bit of the absolute time, and so on.

In some examples, the location information may be represented by common location information (CommonLocationInfo).

The information element CommonLocationInfo is used to transmit detailed location information available on the UE to correlate a measurement value and UE location information.

In other examples, the location information may be represented by location coordinates (LocationCoordinates).

In some examples, the location information of the first waypoint is used to indicate a flight location for the UE to plan to pass through the first waypoint.

By way of example, the location information of the first waypoint may be location information in three-dimensional space, and may include longitude information, latitude information, and altitude information.

In some examples, time information for the UE to plan to pass through the first waypoint may be a timestamp. For example, a timestamp when the UE arrives at the first waypoint.

In some examples, the waypoint index of the first waypoint is used to identify the first waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In some examples, the location indication information of the target reference point may include at least one of:
an index of the target reference point;
a cell identifier of the target reference point configured to indicate a cell corresponding to the target reference point, in which the cell is a current serving cell, a neighboring cell of the current serving cell, or a specific cell of the UE; or
absolute location information of the target reference point.

In some examples, the relative location information between the first waypoint and the target reference point may be determined according to the location information of the first waypoint and the absolute location information of the target reference point.

In some examples, the relative location information between the first waypoint and the target reference point may include a relative longitude and a relative latitude. In some examples, the relative location information may also include a relative altitude.

In an embodiment, the sending configuration includes:
location indication information of one or more alternative reference points; and
one or more first thresholds, in which different alternative reference points correspond to same or different first thresholds.

In some examples, all the alternative reference points may correspond to the same first threshold. In other examples, different alternative reference points may correspond to different first thresholds. That is, a domain corresponding to the first threshold may be a generic value applicable to all configured alternative reference points, or the first threshold may also be configured individually for each alternative reference point.

In other examples, part of the plurality of alternative reference points may be configured with the same first threshold, and different alternative reference points in another part of alternative reference points may be configured with different first thresholds.

In some examples, an alternative reference point may correspond to a current serving cell, and the alternative reference point as well as a threshold corresponding to the alternative reference point are used to indicate a coverage area of the current serving cell. Or, an alternative reference point may correspond to a neighboring cell, and the alternative reference point as well as a threshold corresponding to the alternative reference point are used to indicate a coverage area of the neighboring cell.

In an embodiment, the path information includes waypoint information of one or more second waypoints; and
the second waypoint is a waypoint having a distance from the alternative reference point satisfying a first preset condition among one or more waypoints for the UE to plan to pass through, in which the first preset condition is associated with the first threshold.

In some examples, for each alternative reference point, the UE may determine a waypoint having a distance from the alternative reference point satisfying a first preset condition among the one or more waypoints for the UE to plan to pass through.

In an embodiment, a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

In some examples, for each alternative reference point, the UE may determine a waypoint having a distance from the alternative reference point being less than or equal to a first threshold corresponding to the alternative reference point among the one or more waypoints for the UE to plan to pass through.

In the present embodiment, the number of alternative reference points having a distance from a certain second waypoint being less than or equal to a corresponding first threshold may be one or more.

By way of example, if a certain waypoint is located within a cell coverage area (determined by a first threshold corresponding to the alternative reference point) of an alternative reference point, the waypoint may be used as a second waypoint.

By way of example, if a certain waypoint is located within a cross-coverage area of cell coverage areas (the cell coverage area of each alternative reference point is determined by a first threshold corresponding to each alternative reference point) of different alternative reference points, the waypoint may be used as a second waypoint.

By way of example, a certain waypoint is located between the alternative reference point A and the alternative reference point B; if the distance between the waypoint and the alternative reference point A is less than or equal to the first threshold corresponding to the alternative reference point A, and the distance between the waypoint and the alternative reference point B is less than or equal to the first threshold corresponding to the alternative reference point B, the waypoint may be used as a second waypoint; and the UE may include the waypoint information of the second waypoint in the path information reported to the network device.

In some examples, for each alternative reference point, the UE may determine a waypoint for the UE to plan to pass through and closest to the alternative reference point; and if a distance between the determined waypoint and the alternative reference point is greater than or equal to a first threshold corresponding to the alternative reference point, the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being less than or equal to a first threshold corresponding to the alternative reference point; and if a distance between a previous waypoint adjacent to the waypoint and the alternative reference point is greater than the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being greater than a first threshold corresponding to the alternative reference point; and if a distance between a previous waypoint adjacent to the waypoint and the alternative reference point is less than or equal to the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being less than or equal to a first threshold corresponding to the alternative reference point; and if a distance between a next waypoint adjacent to the waypoint and the alternative reference point is greater than the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being greater than a first threshold corresponding to the alternative reference point; and if a distance between a next waypoint adjacent to the waypoint and the alternative reference point is less than or equal to the first threshold corresponding to the alternative reference point, then the waypoint may be used as a second waypoint and the waypoint information of the second waypoint may be included in the path information reported to the network device.

In an embodiment, the waypoint information of the second waypoint includes at least one of:
location information of the second waypoint;
time information for the UE to plan to pass through the second waypoint;
a waypoint index of the second waypoint; or
location indication information of the alternative reference point having a distance from the second waypoint satisfying the first preset condition.

In some examples, the location information of the second waypoint is used to indicate a flight location for the UE to plan to pass through the second waypoint.

By way of example, the location information of the second waypoint may be location information in three-dimensional space, and may include longitude information, latitude information, and altitude information.

In some examples, time information for the UE to plan to pass through the second waypoint may be a timestamp. For example, a timestamp when the UE arrives at the second waypoint.

In some examples, the waypoint index of the second waypoint is used to identify the first waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In an embodiment, the path information further includes:
duration information indicating a duration for a distance between the one or more waypoints for the UE to plan to pass through and the alternative reference point satisfying the first preset condition.

In the present embodiment, for each alternative reference point, the UE may determine a waypoint having a distance from the alternative reference point satisfying the first preset condition among the waypoints for the UE to plan to pass through and a duration for the alternative reference point and the waypoint satisfying the first preset condition, and the duration may be included in the path information of the UE reported to the network device.

In an embodiment, the location indication information of the alternative reference point includes at least one of:
an index of the alternative reference point;
a cell identifier of the alternative reference point configured to indicate a cell corresponding to the alternative reference point, wherein the cell is a current serving cell, a neighboring cell of the current serving cell, or a specific cell of the UE; or
absolute location information of the alternative reference point.

In an embodiment, the protocol-agreed parameter includes one of:
time interval information configured to indicate a time interval between two adjacent sends of the path information; or
distance interval information configured to indicate a distance interval passed by the UE between two adjacent sends of the path information,
in which the path information in different sends includes waypoint information of different waypoints for the UE to plan to pass through.

In some examples, a time interval between adjacent two sends of the path information may be set according to a protocol agreement, which is not specifically limited here. For example, the time interval may be 10 or 20 seconds between sending the path information.

In some examples, a distance interval between adjacent two sends of the path information may be set according to a protocol agreement, which is not specifically limited here. For example, the distance interval may be 1000 or 1500 meters between sending the path information.

In the present embodiment, the path information in different sends includes waypoint information of different waypoints for the UE to plan to pass through.

In some examples, the UE may determine the waypoint information of the waypoint included in the path information of different sends according to time information and/or location information of each waypoint planned to pass through.

By way of example, taking a time interval of sending the path information once at an interval of 10 seconds as an example, if the UE plans to pass through the waypoint 1, the waypoint 2, the waypoint 3, the waypoint 4, and the waypoint 5 at the 1st s, the 5th s, the 8th s, the 12th s, and the 16th s, respectively, then the path information (e.g., sent at t=0s) sent by the UE for the 1st time may include the waypoint information of the waypoint 1, the waypoint 2, and the waypoint 3; and the path information (e.g., sent at t=10s) sent by the UE for the 2nd time may include the waypoint information of the waypoint 4 and the waypoint 5.

In an embodiment, the path information includes waypoint information of a third waypoint; and the third waypoint is a waypoint having a shortest distance from a current location of the UE among one or more waypoints for the UE to plan to pass through; or
the third waypoint is a waypoint having a distance from a current location of the UE satisfying a second preset condition among one or more waypoints for the UE to plan to pass through, in which the second preset condition is associated with a preset second threshold.

In some examples, the current location of the UE may be a relative location of the UE itself relative to the serving cell, or may be an absolute location of the UE.

In some examples, in a case where a distance between the third waypoint and the current location of the UE is less than or equal to the second threshold, the distance between the third waypoint and the current location of the UE satisfies the second preset condition.

In other examples, in a case where a distance between the third waypoint and the current location of the UE is greater than the second threshold, the distance between the third waypoint and the current location of the UE satisfies the second preset condition.

In an embodiment, the protocol-agreed parameter includes the time interval information, and the path information includes at least one of:
location information of the third waypoint;
a waypoint index of the third waypoint;
the time interval information; or
time information corresponding to a start waypoint in a flight path of the UE.

In some examples, the location information of the third waypoint is used to indicate a flight location for the UE to plan to pass through the third waypoint.

By way of example, the location information of the third waypoint may be location information in three-dimensional space, and may include longitude information, latitude information, and altitude information.

In some examples, the altitude information may be used to indicate a flight altitude of the UE. By way of example, the flight altitude of the UE may be an altitude of the UE relative to a sea level or may be a phase altitude of the UE relative to the base station.

In an embodiment, the protocol-agreed parameter includes the distance interval information, and the path information includes at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

In some examples, time information for the UE to plan to pass through the third waypoint may be a timestamp. For example, a timestamp when the UE arrives at the third waypoint.

In some examples, the waypoint index of the third waypoint is used to identify the third waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In some examples, the flight speed of the UE may be a vertical speed, or a horizontal speed, or a relative speed relative to the ground.

In some examples, location information corresponding to a start waypoint in the flight path of the UE is used to indicate an initial flight location of the UE. By way of example, the initial flight location may be location information in three-dimensional space, may include longitude information and latitude information, and may also include altitude information of the UE.

The time information corresponding to the start waypoint in the flight path of the UE may be a timestamp. For example, a timestamp when the UE pass through the start waypoint.

FIG. 4 is a flow chart of a method for information transmission illustrated according to an illustrative embodiment. The method for information transmission is performed by a network device, and as illustrated in FIG. 4, the method may include following steps.

In step 401: path information of a UE sent by the UE according to a sending parameter is received, in which the sending parameter includes a sending configuration provided by the network device, or a protocol-agreed parameter.

In some examples, the UE may be a flying device and/or a mobile device moving on the ground. Here, the flying device may for example be an unmanned flying device. In other examples, the UE may also be a UE carried by a person travelling in a flight vehicle.

In some examples, the UE may be located on a UAV and may be integrated in the UAV, for example, the UE may provide a data connection for controlling the UAV or communicating with the UAV.

In some examples, the UE may be a payload of the UAV and perform functions separate from the UAV.

The aforementioned UAV may include any type of unmanned aerial vehicle. For example, the UAV may be an unmanned fixed-wing aircraft, an unmanned airship, an unmanned helicopter, or any other device capable of flight and subject to remote control.

In some examples, the network device may be a base station, e.g. the network device may be a gNB, an eNB, etc. The network device may also be any other network node capable of servicing the UE in the communication system, such as a wireless device or a machine type communication device.

In the present embodiment, the sending parameter is used for the UE to send the path information of the UE. The sending parameter may be a sending configuration provided by a network device, and may also be a protocol-agreed parameter.

In some examples, the sending parameter is used to determine waypoint information of a waypoint for the UE to plan to pass through needed to be reported.

In some examples, the sending configuration may include configuration information used to determine the path information of the UE needed to be reported. For example, the configuration information may include reference point information. In other examples, the configuration information may also include reference point information and a threshold.

In some examples, if the UE is a flying device, the path information is flight path information, and the path information indicates a flight path. For example, a flight path in three-dimensional space. If the UE is a ground mobile device, the path information is ground path information, and the path information indicates a ground movement path. The ground movement path includes, but is not limited to: road and/or rail traffic paths, etc.

In some examples, the path information of the UE may indicate a movement path or a waypoint in the movement path for the UE to plan to pass through.

The movement path for the UE to plan to pass through may include N waypoints; location information of the N waypoints is sequentially ordered and corresponds to the respective time information in one-to-one correspondence. If there are no unforeseen circumstances, the UE passes through the N waypoints in the planned movement path in sequence according to the planned time.

In some examples, the path information of the UE includes waypoint information of a waypoint for the UE to plan to pass through. Here, the UE may send the waypoint information of one or more waypoints in the movement path planned to pass through according to the sending parameter.

In some examples, the waypoint information of the waypoint for the UE to plan to pass through may represent a movement status for the UE to plan to pass through the waypoint.

By way of example, the waypoint information of one waypoint for the UE to plan to pass through may include, but is not limited to, at least one of:
a movement speed or a flight speed for the UE to plan to pass through the waypoint;
time information for the UE to plan to pass through the waypoint;
location information of the waypoint for the UE to plan to pass through; or
a waypoint index of the waypoint for the UE to plan to pass through.

In embodiments of the present disclosure, the path information includes at least time information and/or location information. The time information may be represented by a timestamp.

The timestamp may indicate an absolute time, or a time difference relative to a reference time. This reference time may be an absolute time.

The location information may include, but is not limited to, one or more of longitude information, latitude information, and altitude information. In some examples, the location information may also include elevation information.

In some examples, the location information may include absolute location information such as latitude and longitude, or relative location information relative to a reference point. The reference point can be any one of the preset locations. For example, the reference point may be the absolute location information of the terminal device at a starting moment of the movement, or an absolute location specified in a region such as the equator.

In the present embodiment, the network device receives the path information of a UE sent by the UE according to a sending parameter, in which the sending parameter includes a sending configuration provided by the network device, or a protocol-agreed parameter. In this way, the network device may, according to the path information of the UE, perform operations such as cell handover preparations in advance before the location of the UE reaches certain cells, to realize fast and effective handover of the UE between different cells within the network. The cell here may include, but is not limited to, a terrestrial network cell and/or a non-terrestrial cell. The network device may also configure an appropriate measurement configuration for the terminal device in advance according to the path information.

In embodiments of the present disclosure, the path information of the UE received by the network device is sent by the UE according to the sending parameter, in which the sending parameter includes a sending configuration provided by the network device, or a protocol-agreed parameter. In this way, the path information sent by the UE is enabled to be more targeted, so that the path information of the UE received by the network device is the information required by the network device, and since the path information of the UE is validly usable for the network device, it enables the network device to use the path information of the UE well for the mobility management of the UE. In addition, since the path information sent by the UE is the information required by the network device, this reduces the transmission of unnecessary information, and thus the signaling overhead may be reduced.

In an embodiment, the method may also include:
sending request information to the UE, in which the request information includes the sending configuration.

The request information is used to request the UE to send the path information of the UE.

In some examples, the network device may send the request information including the sending configuration by means of an instruction. The instruction may be a physical layer instruction or a high-level instruction. The high-level instruction may be an RRC instruction or a MAC Control Element (CE).

In some examples, the network device may send the request (UEInformationRequest) information including the sending configuration to the UE. Accordingly, the UE may send the path information of the UE to the network device through response (UEInformationResponse) information according to the sending configuration.

In some examples, when the UE is acting as a flying device, the network device may receive the path information encapsulated in a flight path report (FlightPathInfoReport) and sent by the UE according to the sending parameter.

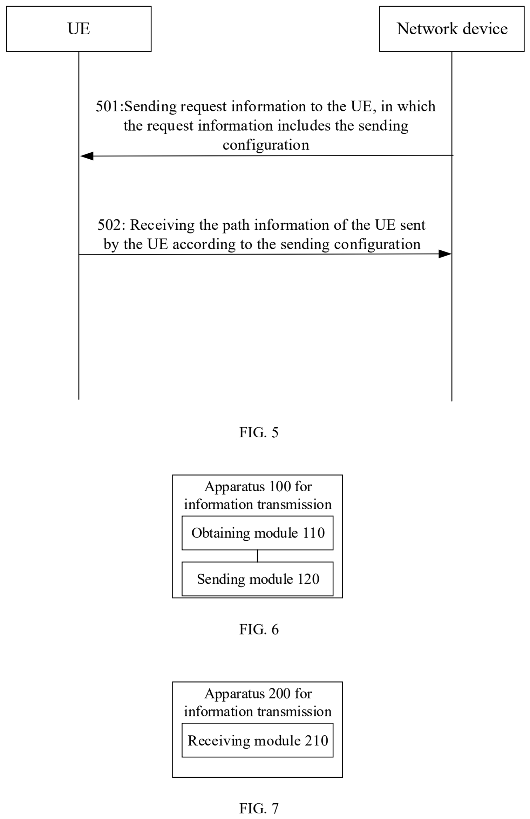

In an embodiment, as illustrated in FIG. 5, a method for information transmission is provided, the method for information transmission is performed by a network device, and the method may include following steps.

In step 501: request information is sent to the UE, in which the request information includes the sending configuration.

In step 502: path information of the UE sent by the UE according to sending configuration is received.

In some examples, the sending configuration included in the request information is used to configure one or more alternative reference points.

In the present embodiment, the network device may send the request information to the UE to request the UE to report the path information, and the sending configuration carried in the request information is used to configure one or more alternative reference points. The network device configures one or more alternative reference points for the UE, and the UE report the waypoint information of the waypoint planned to pass through and closest to the location of the alternative reference point, such as time information and/or location information of the waypoint having the shortest distance from the alternative reference point.

In other examples, the sending configuration included in the request information is used to configure one or more alternative reference points and a threshold corresponding to each alternative reference point.

In the present embodiment, the network device may send the request information to the UE, to request the UE to report the path information, the sending configuration carried in the request information is used to configure one or more alternative reference points and the threshold corresponding to each alternative reference point, and the UE may determine when a distance of which waypoint in the movement path of the UE from the alternative reference point meets the requirement of the threshold (e.g., the distance is less than or equal to the threshold), and report to the network device and/or the reported path information includes only the waypoint information satisfying the requirement of the threshold, such as time information and/or location information of the waypoint having the distance from the alternative reference point satisfying the requirement of the threshold.

In an embodiment, the sending configuration includes:
location indication information of one or more alternative reference points configured to indicate a location of the one or more alternative reference points.

By way of example, the location indication information of the alternative reference point may indicate that the alternative reference point is a current serving cell of the UE. Or, the location indication information of the alternative reference point may indicate that the alternative reference point is a neighboring cell of a current serving cell of the UE.

In some examples, the location indication information of the alternative reference point includes at least one of:
an index of the alternative reference point;
a cell identifier of the alternative reference point configured to indicate a cell corresponding to the alternative reference point, in which the cell is a current serving cell, a neighboring cell of the current serving cell, or a specific cell of the UE; or
absolute location information of the alternative reference point.

In some examples, the index of the alternative reference point may be numbering of the alternative reference point, which may for example be a digital numbering.

The cell identifier of the alternative reference point may be used to identify the cell corresponding to the alternative reference point. In some examples, the cell corresponding to the alternative reference point may include a serving cell or a neighboring cell or a specific cell of the UE.

In some examples, the absolute location information of the alternative reference point may include an absolute longitude and an absolute latitude of the alternative reference point. In some examples, the absolute location information of the alternative reference point may also include an absolute altitude of the alternative reference point.

In the present embodiment, the sending configuration provided to the UE by the network device includes the location indication information of the one or more alternative reference points, such that the UE may send path information of the UE according to the location indication information of the one or more alternative reference points.

By way of example, the UE may determine a location of the one or more alternative reference points according to the location indication information of the one or more alternative reference points, and send the waypoint information of the waypoint in the movement path of the UE having the shortest distance from the location of each alternative reference point.

In an embodiment, the path information includes waypoint information of one or more first waypoints; and
the first waypoint is a waypoint having a shortest distance from a target reference point among one or more waypoints for the UE to plan to pass through, in which the target reference point is one of the alternative reference points.

In some examples, there may be one or more target reference points having the shortest distance from the first waypoint. For example, among the waypoints for the UE to plan to pass through, if a waypoint is located between two alternative reference points and the waypoint has the shortest distance from each of the two alternative reference points, the waypoint may be determined to be the first waypoint.

In other examples, there may be one or more first waypoints having the shortest distance from the same target reference point. For example, among the waypoints for the UE to plan to pass through, if an alternative reference point is located between two waypoints and the alternative reference point has the shortest distance from each of the two waypoints, then the alternative reference point is used as the target reference point, and the two waypoints are determined to be the first waypoints.

By way of example, the distance between the waypoint and the alternative reference point is a distance in three-dimensional space.

In the present embodiment, the UE, for each alternative reference point indicated by the sending configuration, takes the waypoint having the shortest distance from the alternative reference point as the first waypoint, and sends path information including the waypoint information of the first waypoint.

In an embodiment, the waypoint information of the first waypoint includes at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

By way of example, the time information may include a timestamp, and the timestamp includes a timestamp used to describe a waypoint for the UE to plan to pass through.

In some examples, the time information may be absolute time information (AbsoluteTimeInfo).

Information Element (IE) AbsoluteTimeInfo is absolute time in the format YY-MM-DD HH:MM:SS with BCD (Binary Coded Decimal) encoding. The first or the leftmost bit of the bit string is the highest bit of the absolute time, and so on.

In some examples, the location information may be represented by common location information (CommonLocationInfo).

The information element CommonLocationInfo is used to transmit detailed location information available on the UE to correlate a measurement value and UE location information.

In other examples, the location information may be represented by location coordinates (LocationCoordinates).

In some examples, the location information of the first waypoint is used to indicate a flight location for the UE to plan to pass through the first waypoint.

By way of example, the location information of the first waypoint may be location information in three-dimensional space, and may include longitude information, latitude information, and altitude information.

In some examples, time information for the UE to plan to pass through the first waypoint may be a timestamp. For example, a timestamp when the UE arrives at the first waypoint.

In some examples, the waypoint index of the first waypoint is used to identify the first waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In some examples, the location indication information of the target reference point may include at least one of:
an index of the target reference point;
a cell identifier of the target reference point configured to indicate a cell corresponding to the target reference point, in which the cell is a current serving cell, a neighboring cell of the current serving cell, or a specific cell of the UE; or
absolute location information of the target reference point.

In some examples, the relative location information between the first waypoint and the target reference point may be generated according to the location information of the first waypoint and the absolute location information of the target reference point.

In some examples, the relative location information between the first waypoint and the target reference point may include a relative longitude and a relative latitude. In some examples, the relative location information may also include a relative altitude.

In an embodiment, the sending configuration includes:
location indication information of one or more alternative reference points; and
one or more first thresholds,
in which different alternative reference points correspond to same or different first thresholds.

In some examples, all the alternative reference points may correspond to the same first threshold. In other examples, different alternative reference points may correspond to different first thresholds. That is, a domain corresponding to the first threshold may be a generic value applicable to all configured alternative reference points, or the first threshold may also be configured individually for each alternative reference point.

In other examples, part of the plurality of alternative reference points may be configured with the same first threshold, and different alternative reference points in another part of alternative reference points may be configured with different first thresholds.

In some examples, an alternative reference point may correspond to a current serving cell, and the alternative reference point as well as a threshold corresponding to the alternative reference point are used to indicate a coverage area of the current serving cell. Or, an alternative reference point may correspond to a neighboring cell, and the alternative reference point as well as a threshold corresponding to the alternative reference point are used to indicate a coverage area of the neighboring cell.

In an embodiment, the path information includes waypoint information of one or more second waypoints; and
the second waypoint is a waypoint having a distance from the alternative reference point satisfying a first preset condition among one or more waypoints for the UE to plan to pass through, in which the first preset condition is associated with the first threshold.

In some examples, for each alternative reference point, the UE may determine a waypoint having a distance from the alternative reference point satisfying a first preset condition among the one or more waypoints for the UE to plan to pass through.

In an embodiment, a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

In some examples, for each alternative reference point, the UE may determine a waypoint having a distance from the alternative reference point being less than or equal to a first threshold corresponding to the alternative reference point among the one or more waypoints for the UE to plan to pass through.

In the present embodiment, the number of alternative reference points having a distance from a certain second waypoint being less than or equal to a corresponding first threshold may be one or more.

By way of example, if a certain waypoint is located within a cell coverage area (determined by a first threshold corresponding to the alternative reference point) of an alternative reference point, the waypoint may be used as a second waypoint.

By way of example, if a certain waypoint is located within a cross-coverage area of cell coverage areas (the cell coverage area of each alternative reference point is determined by a first threshold corresponding to each alternative reference point) of different alternative reference points, the waypoint may be used as a second waypoint.

By way of example, a certain waypoint is located between the alternative reference point A and the alternative reference point B; if the distance between the waypoint and the alternative reference point A is less than or equal to the first threshold corresponding to the alternative reference point A, and the distance between the waypoint and the alternative reference point B is less than or equal to the first threshold corresponding to the alternative reference point B, the waypoint may be used as a second waypoint; and the waypoint information of the second waypoint may be included in the path information reported to the network device.

In some examples, for each alternative reference point, the UE may determine a waypoint for the UE to plan to pass through and closest to the alternative reference point; and if a distance between the determined waypoint and the alternative reference point is greater than or equal to a first threshold corresponding to the alternative reference point, the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being less than or equal to a first threshold corresponding to the alternative reference point; and if a distance between a previous waypoint adjacent to the waypoint and the alternative reference point is greater than the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being greater than a first threshold corresponding to the alternative reference point; and if a distance between a previous waypoint adjacent to the waypoint and the alternative reference point is less than or equal to the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being less than or equal to a first threshold corresponding to the alternative reference point; and if a distance between a next waypoint adjacent to the waypoint and the alternative reference point is greater than the first threshold corresponding to the alternative reference point, then the waypoint may be used as a second waypoint and the waypoint information of the second waypoint may be included in the path information reported to the network device.

In some examples, for each alternative reference point, the UE may determine a waypoint for the UE to plan to pass through and having a distance from the alternative reference point being greater than a first threshold corresponding to the alternative reference point; and if a distance between a next waypoint adjacent to the waypoint and the alternative reference point is less than or equal to the first threshold corresponding to the alternative reference point, then the waypoint may be used as a second waypoint and the waypoint information of the second waypoint may be included in the path information reported to the network device.

In an embodiment, the waypoint information of the second waypoint includes at least one of:
location information of the second waypoint;
time information for the UE to plan to pass through the second waypoint;
a waypoint index of the second waypoint; or
location indication information of the alternative reference point having a distance from the second waypoint satisfying the first preset condition.

In some examples, the location information of the second waypoint is used to indicate a flight location for the UE to plan to pass through the second waypoint.

By way of example, the location information of the second waypoint may be location information in three-dimensional space, and may include longitude information, latitude information, and altitude information.

In some examples, time information for the UE to plan to pass through the second waypoint may be a timestamp. For example, a timestamp when the UE arrives at the second waypoint.

In some examples, the waypoint index of the second waypoint is used to identify the first waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In an embodiment, the path information further includes:
duration information indicating a duration for a distance between the one or more waypoints for the UE to plan to pass through and the alternative reference point satisfying the first preset condition.

In the present embodiment, for each alternative reference point, the UE may determine a waypoint having a distance from the alternative reference point satisfying the first preset condition among the waypoints for the UE to plan to pass through and a duration for the alternative reference point and the waypoint satisfying the first preset condition, and the duration may be included in the path information of the UE reported to the network device.

In an embodiment, the location indication information of the alternative reference point includes at least one of:
an index of the alternative reference point;
a cell identifier of the alternative reference point configured to indicate a cell corresponding to the alternative reference point, in which the cell is a current serving cell, a neighboring cell of the current serving cell, or a specific cell of the UE; or
absolute location information of the alternative reference point.

In an embodiment, the protocol-agreed parameter includes one of:
time interval information configured to indicate a time interval between two adjacent sends of the path information; or
distance interval information configured to indicate a distance interval passed by the UE between two adjacent sends of the path information,
in which the path information in different sends includes waypoint information of different waypoints for the UE to plan to pass through.

In some examples, a time interval between adjacent two sends of the path information may be set according to a protocol agreement, which is not specifically limited here. For example, the time interval may be 10 or 20 seconds between sending the path information.

In some examples, a distance interval between adjacent two sends of the path information may be set according to a protocol agreement, which is not specifically limited here. For example, the distance interval may be 1000 or 1500 meters between sending the path information.

In the present embodiment, the path information in different sends includes waypoint information of different waypoints for the UE to plan to pass through.

In some examples, the UE may determine the waypoint information of the waypoint included in the path information of different sends according to time information and/or location information of each waypoint planned to pass through.

By way of example, taking a time interval of sending the path information once at an interval of 10 seconds as an example, if the UE plans to pass through the waypoint 1, the waypoint 2, the waypoint 3, the waypoint 4, and the waypoint 5 at the 1st s, the 5th s, the 8th s, the 12th s, and the 16th s, respectively, then the path information (e.g., sent at t=0s) sent by the UE for the 1st time may include the waypoint information of the waypoint 1, the waypoint 2, and the waypoint 3; and the path information (e.g., sent at t=10s) sent by the UE for the 2nd time may include the waypoint information of the waypoint 4 and the waypoint 5.

In an embodiment, the path information includes waypoint information of a third waypoint; and
the third waypoint is a waypoint having a shortest of distance from a current location of the UE among one or more waypoints of the UE to plan to pass through; or
the third waypoint is a waypoint having a distance from a current location of the UE satisfying a second preset condition among one or more waypoints for the UE to plan to pass through, in which the second preset condition is associated with a preset second threshold.

In an embodiment, the protocol-agreed parameter includes the time interval information, and the path information includes at least one of:
location information of the third waypoint;
a waypoint index of the third waypoint;
the time interval information; or
time information corresponding to a start waypoint in a flight path of the UE.

In some examples, a current location of the UE may be a relative location of the UE itself relative to the serving cell, or may be an absolute location of the UE.

In some examples, in a case where a distance between the third waypoint and the current location of the UE is less than or equal to the second threshold, the distance between the third waypoint and the current location of the UE satisfies the second preset condition.

In other examples, in a case where a distance between the third waypoint and the current location of the UE is greater than the second threshold, the distance between the third waypoint and the current location of the UE satisfies the second preset condition.

In an embodiment, the protocol-agreed parameter includes the time interval information, and the path information includes at least one of:
location information of the third waypoint;
a waypoint index of the third waypoint;
the time interval information; or
time information corresponding to a start waypoint in a flight path of the UE.

In some examples, the location information of the third waypoint is used to indicate a flight location for the UE to plan to pass through the third waypoint.

By way of example, the location information of the third waypoint may be location information in three-dimensional space, and may include longitude information, latitude information, and altitude information.

In some examples, the altitude information is used to indicate a flight altitude of the UE. By way of example, the flight altitude of the UE may be an altitude of the UE relative to a sea level or may be a phase altitude of the UE relative to the base station.

In an embodiment, the protocol-agreed parameter includes the distance interval information, and the path information includes at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

In some examples, time information for the UE to plan to pass through the third waypoint may be a timestamp. For example, a timestamp when the UE arrives at the third waypoint.

In some examples, the waypoint index of the third waypoint is used to identify the third waypoint for the UE to plan to pass through.

The waypoint index may be a waypoint numbering. By way of example, the waypoint numbering may be a digital numbering of the waypoints for the UE to pass through in accordance with a plan in forward order. By way of further example, the waypoint numbering may also be a digital numbering of the waypoints for the UE to pass through in accordance with a plan in reverse order. It is worth noting that the waypoint index may also be a random numbering, as long as it is information uniquely representing a waypoint, which is not specifically limited by the present embodiment.

In some examples, the flight speed of the UE may be a vertical speed, or a horizontal speed, or a relative speed relative to the ground.

In some examples, location information corresponding to a start waypoint in the flight path of the UE is used to indicate an initial flight location of the UE. By way of example, the initial flight location may be location information in three-dimensional space, may include longitude information and latitude information on the ground, and may also include altitude information.

The time information corresponding to the start waypoint in the flight path of the UE may be a timestamp. For example, a timestamp when the UE pass through the start waypoint.

To further explain any embodiments of the present disclosure, several specific embodiments are provided below.

Embodiments of the present disclosure provide a method of information transmission in which the UE may determine, based on configuration information of a network, contents of flight path information needed to be reported, or the UE may report the flight path information in an average manner, thereby reducing signaling overhead.

### Example I

Embodiments of the present disclosure provide a method for transmission information, and the method may include:
The network device configures the reference location, and the UE reports the time and location of the waypoint closest to the reference location.

In the present embodiment, the network device configuring the reference location includes the network device sending the request information to the UE, to request the UE to report the flight path information, in which one or more reference locations may be carried in the request information.

In some examples, each reference location may correspond to a current serving cell or a neighboring cell.

In some examples, if the network is supported to indicate a plurality of reference locations, each reference location may correspond to an index or a cell identifier.

In some examples, when the UE receives the request information sent by the network device, the flight path information reported by the UE includes waypoint information with the shortest distance from a reference location indicated by the network device, and the waypoint information may include a time stamp and/or location information.

In some examples, the UE may only report information of the waypoint having the shortest distance from the reference location or report the flight path information including these waypoint information.

In some examples, the UE may indicate in the flight path information which waypoints are the waypoints with the shortest distance from the reference location, and/or indicate a corresponding reference location, e.g. indicate an index or a cell identifier corresponding to the reference location.

In some examples, the network side receives the flight path information reported by the UE.

### Example II

Embodiments of the present disclosure provide a method for transmission information, and the method may include:
The network device configures a reference location and a threshold, and the UE determines, according to the flight path, when the distance of the flight path of the UE from the reference location is greater than or less than the threshold and reports it to the network device, and/or the reported flight path information includes only the waypoint information satisfying the requirement of the threshold.

In some examples, the network device configuring the reference location and the threshold may include the network device sending the request information to the UE, to request the UE to report the flight path information, in which one reference location and threshold may be carried in the request information.

In some examples, the reference location may correspond to a current serving cell, and the reference location and the threshold are used to indicate a coverage area of the current serving cell. Or, the reference location may correspond to a neighboring cell, and the reference location and the threshold are used to indicate a coverage area of a certain cell.

In some examples, when the UE receives the request message sent by the network device, the UE reports the flight path information, and the flight path information may be one of:
the flight path information reported by the UE includes flight path information comprised of a waypoint with a distance between a location of the waypoint and the reference location being less than (or less than or equal to) the threshold, in which the location and/or timestamp of the respective waypoints are included;
the flight path information reported by the UE includes flight path information comprised of a waypoint with a distance between a location of the waypoint and the reference location being greater than (or greater than or equal to) the threshold, in which the location and/or timestamp of the respective waypoints are included;
the flight path information reported by the UE includes the time and/or corresponding location for a distance of the flight path of the UE from the reference location to change from greater than the threshold to less than or equal to the threshold; or
the flight path information reported by the UE includes the time and/or corresponding location for a distance of the flight path of the UE from the reference location to change from less than or equal to the threshold to greater than the threshold.

In some examples, the flight path information reported by the UE includes the duration for a distance of the flight path of the UE from the reference location satisfying the threshold.

In some examples, the UE may indicate in the flight path information which waypoints are first to satisfy the requirement of the threshold, e.g., indicating the index corresponding to the waypoint.

In some examples, the network device may also configure a plurality of reference locations and reference thresholds.

In some examples, if the network device is supported to indicate a plurality of reference locations and thresholds, each reference location and threshold may correspond to an index or a cell identifier.

In some examples, the UE may report the information described in 3 for each reference location and corresponding threshold, which may include indexes or cell identifiers corresponding to these reference locations and thresholds.

In some examples, the network side receives the flight path information reported by the UE.

### Example III

Embodiments of the present disclosure provide a method for transmission information, and the method may include:
the UE reporting the path information in an average manner, to informs the network device of the time interval or distance interval between different waypoints.

In some examples, the network device sends the request information to the UE, to request the UE to report the flight path information.

In some examples, in response to the UE receiving the request information from the network device, the UE determines the time interval between adjacent waypoints in the flight path information to be reported, and reports the flight path information, and the flight path information may include one or more of:
location information correspond of each waypoint;
time interval between each waypoint; or
time corresponding to a start waypoint of the flight path information.

In some examples, if the flight path information does not include a time corresponding to the start waypoint of the flight path information, the default is that the time the network device receives the flight path information is the time corresponding to the start waypoint of the flight path.

In some examples, in response to the UE receiving the request information from the network device, the UE determines the distance between adjacent waypoints in the flight path information to be reported, and reports the flight path information, and the flight path information may include one or more of:
a timestamp corresponding to each waypoint;
distance between each waypoint;
a flight direction or a movement direction of the UE;
a movement speed of the UE; or
location and/or timestamp corresponding to a start waypoint of the flight path information.

In this example, only UAV UEs flying in a straight line are applicable.

In some examples, the network side receives the flight path information reported by the UE.

FIG. 6 is a block diagram of an apparatus for information transmission illustrated according to an illustrative embodiment. The apparatus for information transmission is applied to a UE, and as illustrated in FIG. 6, the apparatus 100 includes:
an obtaining module 110 configured to obtain a sending parameter, in which the sending parameter includes a sending configuration provided by a network device, or a protocol-agreed parameter; and
a sending module 120 configured to send path information of the UE according to the sending parameter.

In an embodiment, the obtaining module 110 is configured to:
receive request information sent by the network device, in which the request information includes the sending configuration.

In an embodiment, the sending configuration includes:
location indication information of one or more alternative reference points.

In an embodiment, the path information includes waypoint information of one or more first waypoints; and
the first waypoint is a waypoint having a shortest distance from a target reference point among one or more waypoints for the UE to plan to pass through, in which the target reference point is one of the alternative reference points.

In an embodiment, the waypoint information of the first waypoint includes at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

In an embodiment, the sending configuration includes:
location indication information of one or more alternative reference points; and
one or more first thresholds, in which different alternative reference points correspond to same or different first thresholds.

In an embodiment, the path information includes waypoint information of one or more second waypoints; and
the second waypoint is a waypoint having a distance from the alternative reference point satisfying a first preset condition among one or more waypoints for the UE to plan to pass through, in which the first preset condition is associated with the first threshold.

In an embodiment, a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

In an embodiment, the waypoint information of the second waypoint includes at least one of:
location information of the second waypoint;
time information for the UE to plan to pass through the second waypoint;
a waypoint index of the second waypoint; or
location indication information of the alternative reference point having a distance from the second waypoint satisfying the first preset condition.

In an embodiment, the path information further includes:
duration information indicating a duration for a distance between the one or more waypoints for the UE to plan to pass through and the alternative reference point satisfying the first preset condition.

In an embodiment, the location indication information of the alternative reference point includes at least one of:
an index of the alternative reference point;
a cell identifier of the alternative reference point configured to indicate a cell corresponding to the alternative reference point, in which the cell is a current serving cell, a neighboring cell of the current serving cell, or a specific cell of the UE; or
absolute location information of the alternative reference point.

In an embodiment, the protocol-agreed parameter includes one of:
time interval information configured to indicate a time interval between two adjacent sends of the path information; or
distance interval information configured to indicate a distance interval passed by the UE between two adjacent sends of the path information,
in which the path information in different sends includes waypoint information of different waypoints for the UE to plan to pass through.

In an embodiment, the path information includes waypoint information of a third waypoint; and
the third waypoint is a waypoint having a shortest distance from a current location of the UE among one or more waypoints for the UE to plan to pass through; or
the third waypoint is a waypoint having a distance from a current location of the UE satisfying a second preset condition among one or more waypoints for the UE to plan to pass through, in which the second preset condition is associated with a preset second threshold.

In an embodiment, the protocol-agreed parameter includes the time interval information, and the path information includes at least one of:
location information of the third waypoint;
a waypoint index of the third waypoint;
the time interval information; or
time information corresponding to a start waypoint in a flight path of the UE.

In an embodiment, the protocol-agreed parameter includes the distance interval information, and the path information includes at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

FIG. 7 is a block diagram of an apparatus for information transmission illustrated according to an illustrative embodiment. The apparatus for information transmission is applied to a network device, and as illustrated in FIG. 7, the apparatus 200 includes:
a receiving module 210 configured to receive path information of a user equipment (UE) sent by the UE according to a sending parameter, in which the sending parameter includes a sending configuration provided by the network device, or a protocol-agreed parameter.

In an embodiment, the apparatus further includes:
a sending module configured to send request information to the UE, in which the request information includes the sending configuration.

In an embodiment, the sending configuration includes:
location indication information of one or more alternative reference points configured to indicate a location of the one or more alternative reference points; and
In an embodiment, the path information includes waypoint information of one or more first waypoints; and
the first waypoint is a waypoint having a shortest distance from a target reference point among one or more waypoints for the UE to plan to pass through, in which the target reference point is one of the alternative reference points.

In an embodiment, the waypoint information of the first waypoint includes at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

In an embodiment, the sending configuration includes:
location indication information of one or more alternative reference points; and
one or more first thresholds,
in which different alternative reference points correspond to same or different first thresholds.

In an embodiment, the path information includes waypoint information of one or more second waypoints; and
the second waypoint is a waypoint having a distance from the alternative reference point satisfying a first preset condition among one or more waypoints for the UE to plan to pass through, in which the first preset condition is associated with the first threshold.

In an embodiment, a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

In an embodiment, the waypoint information of the second waypoint includes at least one of:
location information of the second waypoint;
time information for the UE to plan to pass through the second waypoint;
a waypoint index of the second waypoint; or
location indication information of the alternative reference point having a distance from the second waypoint satisfying the first preset condition.

In an embodiment, the path information further includes:
duration information indicating a duration for a distance between the one or more waypoints for the UE to plan to pass through and the alternative reference point satisfying the first preset condition.

In an embodiment, the location indication information of the alternative reference point includes at least one of:
an index of the alternative reference point;
a cell identifier of the alternative reference point configured to indicate a cell corresponding to the alternative reference point, in which the cell is a current serving cell, a neighboring cell of the current serving cell, or a specific cell of the UE; or
absolute location information of the alternative reference point.

In an embodiment, the protocol-agreed parameter includes one of:
time interval information configured to indicate a time interval between two adjacent sends of the path information; or
distance interval information configured to indicate a distance interval passed by the UE between two adjacent sends of the path information,
in which the path information in different sends includes waypoint information of different waypoints for the UE to plan to pass through.

In an embodiment, the path information includes waypoint information of a third waypoint; and
the third waypoint is a waypoint having a shortest of distance from a current location of the UE among one or more waypoints of the UE to plan to pass through; or
the third waypoint is a waypoint having a distance from a current location of the UE satisfying a second preset condition among one or more waypoints for the UE to plan to pass through, in which the second preset condition is associated with a preset second threshold.

In an embodiment, the protocol-agreed parameter includes the time interval information, and the path information includes at least one of:
location information of the third waypoint;
a waypoint index of the third waypoint;
the time interval information; or
time information corresponding to a start waypoint in a flight path of the UE.

In an embodiment, the protocol-agreed parameter includes the distance interval information, and the path information includes at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

With regard to the device in above embodiment, the specific manner in which each module performs an operation is described in detail in the embodiments relating to the method, and is not described in detail herein.

Embodiments of the present disclosure provide a communication device including a processor, a memory, and an executable program stored in the memory and capable of being run by the processor, when running the executable program, the processor performs the method for information transmission provided by any technical solution described above.

The processor may include various types of storage media that are non-transitory computer storage media capable of continuing to memorize the information stored thereon after the communication device is powered down.

Here, the communication device includes a UE or a network device.

The processor may be connected to the memory via a bus or the like for reading the executable program stored on the memory, e.g., at least one of the methods for information transmission illustrated in FIGS. 2 to 5.

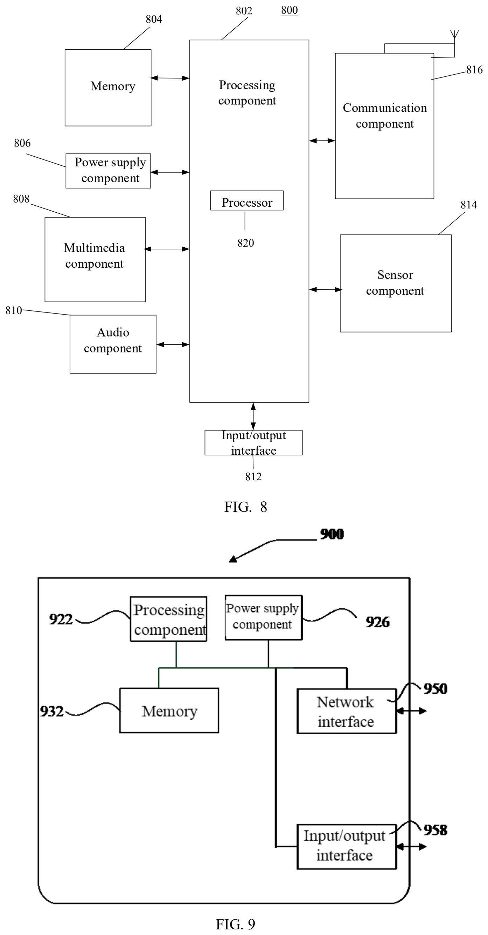

FIG. 8 is a block diagram of a UE 800 illustrated according to an illustrative embodiment. For example, the UE 800 may be an unmanned aerial vehicle, a mobile phone, a computer, a digital broadcast terminal, a messaging device, a game console, a tablet device, a medical device, a fitness device, a personal digital assistant, etc.

As illustrated in FIG. 8, the UE 800 may include one or more the following components a processing component 802, a memory 804, a power supply component 806, a multimedia component 808, an audio component 810, an input/output (I/O) interface 812, a sensor component 814, and a communication component 816.

The processing component 802 generally controls overall operation of the UE 800, such as operations related to display, call, data communication, camera and record. The processing component 802 may include one or a plurality of processors 820 to execute instructions, so as to generate all or a part of steps of the above-described method. Additionally, the processing component 802 may include one or a plurality of modules, facilitating interaction between the processing component 802 and other components. For example, the processing component 802 may include a multimedia module, thereby facilitating interaction between the multimedia component 808 and the processing component 802.

The memory 804 is configured to store various types of data to support the operations of the UE 800. Examples of these data include instructions, contact data, telephone book data, messages, pictures, videos, etc. for any application or method operated on the UE 800. The memory 804 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power supply component 806 provides power for various components of the UE 800. The power supply component 806 may include a power management system, one or a plurality of power sources, and other components associated with generating, managing and distributing power for the UE 800.

The multimedia component 808 includes a screen providing one output interface between the UE 800 and the user. In some embodiments, the screen may include a liquid crystal display (LCD), and a touch panel (TP). If the screen includes the touch panel, the screen may be realized as a touch screen, so as to receive an input signal from the user. The touch panel includes one or a plurality of touch sensors to sense touch, swipe and gesture on the touch panel. The touch sensor not only can sense the boundary of the touch or swipe action, but also can detect duration time and pressure related to the touch or swipe operation. In in some embodiments, the multimedia component 808 includes a front camera and/or a rear camera. When the UE 800 is in an operation mode, such as in a photographing or video mode, the front camera and/or the rear camera can receive external multimedia data. Each of the front camera and the rear camera may be a fixed optical lens system or has a focal length and optical zoom capability.

The audio component 810 is configured to output and/or input an audio signal. For example, the audio component 810 includes a microphone (MIC). The microphone is configured to receive external audio signal when the UE 800 is in the operation mode, such as in a call mode, a record mode and a speech recognition mode. The received audio signal can be further stored in the memory 804 or transmitted via the communication component 816. In some embodiments, the audio component 810 further includes a speaker configured to output the audio signal.

The input/output (I/O) interface 812 provides interfaces between the processing component 802 and peripheral interface modules, and the forgoing peripheral interface module may be a keyboard, a click wheel, a button, etc. The button may include but not limited to a homepage button, a volume button, a start button and a lock button.

The sensor component 814 includes one or a plurality of sensors configured to provide state assessments of various aspects of UE 800. For example, the sensor component 814 may detect on/off state of the UE 800, relative locating of components. For example, the components may be a display and a keypad of the UE 800. The sensor component 814 may further detect locational variation of the UE 800 or one component of the UE 800, presence or absence of contact between the user and the UE 800, orientation or acceleration/deceleration of the UE 800 and temperature variation of the UE 800. The sensor component 814 may include a proximity sensor configured to detect presence of nearby objects without any physical contact. The sensor component 814 may also include an optical sensor, such as a COMS or CCD image sensor configured to use in an imaging application. In some embodiments, the sensor component 814 may further include an acceleration sensor, a gyro sensor, a magnetic sensor, a pressure sensor or a temperature sensor.

The communication component 816 is configured to facilitate wired or wireless communication between the UE 800 and other devices. The UE 800 may access to wireless network based on communication standard, such as Wi-Fi, 2G, or 3G, or combination thereof. In an illustrative embodiment, the communication component 816 receives a broadcast signal or information related to the broadcast from an external broadcast management system. In an illustrative embodiment, the communication component 816 further includes a near-field communication (NFC) module to promote short range communication. For example, the NFC module may be realized based on a radio frequency identification (RFID) technology, an infrared data association (IrDA) technology, an ultra-wide band (UWB) technology, a Bluetooth (BT) technology and other technologies.

In an illustrative embodiment, the UE 800 may be realized by one or a plurality of application specific integrated circuits (ASIC), digital signal processors (DSP), digital signal processing equipment (DSPD), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 804 including instructions, and the instructions is executable by the processor 820 of the UE 800 to generate the method described above. For example, the non-transitory computer readable storage medium may be ROM, random access memory (RAM), CD-ROM, magnetic tape, floppy disks, and optical data storage devices, among others.

As illustrated in FIG. 9, an embodiment of the present disclosure illustrates a structure of a network device. For example, the communication device 900 may be provided as a network-side device. The communication device may be a variety of network elements such as the aforementioned access device and/or network function.

Referring to FIG. 9, the communication device 900 includes a processing component 922, which further includes one or more processors, and memory resources represented by a memory 932 for storing instructions, such as an application program, that may be executed by the processing component 922. The application program stored in memory 932 may include one or more modules each corresponding to a set of instructions. In addition, the processing component 922 is configured to execute instructions to perform any of the aforementioned methods applied to the network device, such as the method illustrated in any of FIGS. 4 to 5.

The communication device 900 may also include a power supply component 926 configured to perform power management of the communication device 900, a wired or wireless network interface 950 configured to connect the communication device 900 to a network, and an input/output (I/O) interface 958. The communication device 900 may operate an operating system based on an operating system stored in the memory 932, such as Windows Server TM, Mac OS XTM, UnixTM, LinuxTM, FreeBSDTM, or the like.

Other embodiments of the present disclosure may readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for information transmission, performed by a user equipment (UE), comprising:
obtaining a sending parameter, wherein the sending parameter comprises a sending configuration provided by a network device, or a protocol-agreed parameter; and
sending path information of the UE according to the sending parameter.

2. The method according to claim 1, wherein obtaining the sending parameter comprises:
receiving request information sent by the network device, wherein the request information comprises the sending configuration.

3. The method according to claim 1 or 2, wherein the sending configuration comprises:
location indication information of one or more alternative reference points.

4. The method according to claim 3, wherein the path information comprises waypoint information of one or more first waypoints; and
the first waypoint is a waypoint having a shortest distance from a target reference point among one or more waypoints for the UE to plan to pass through, wherein the target reference point is one of the alternative reference points.

5. The method according to claim 4, wherein the waypoint information of the first waypoint comprises at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

6. The method according to claim 1 or 2, wherein the sending configuration comprises:
location indication information of one or more alternative reference points; and
one or more first thresholds, wherein different alternative reference points correspond to same or different first thresholds.

7. The method according to claim 6, wherein the path information comprises waypoint information of one or more second waypoints; and
the second waypoint is a waypoint having a distance from the alternative reference point satisfying a first preset condition among one or more waypoints for the UE to plan to pass through, wherein the first preset condition is associated with the first threshold.

8. The method according to claim 7, wherein:
a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

9. The method according to claim 7 or 8, wherein the waypoint information of the second waypoint comprises at least one of:
location information of the second waypoint;
time information for the UE to plan to pass through the second waypoint;
a waypoint index of the second waypoint; or
location indication information of the alternative reference point having a distance from the second waypoint satisfying the first preset condition.

10. The method according to any one of claims 7 to 9, wherein the path information further comprises:
duration information indicating a duration for a distance between the one or more waypoints for the UE to plan to pass through and the alternative reference point satisfying the first preset condition.

11. The method according to any one of claims 3 to 10, wherein the location indication information of the alternative reference point comprises at least one of:
an index of the alternative reference point;
a cell identifier of the alternative reference point configured to indicate a cell corresponding to the alternative reference point, wherein the cell is a current serving cell, a neighboring cell of the current serving cell, or a specific cell of the UE; or
absolute location information of the alternative reference point.

12. The method according to claim 1, wherein the protocol-agreed parameter comprises one of:
time interval information configured to indicate a time interval between two adjacent sends of the path information; or
distance interval information configured to indicate a distance interval passed by the UE between two adjacent sends of the path information,
wherein the path information in different sends comprises waypoint information of different waypoints for the UE to plan to pass through.

13. The method according to claim 12, wherein the path information comprises waypoint information of a third waypoint; and
the third waypoint is a waypoint having a shortest distance from a current location of the UE among one or more waypoints for the UE to plan to pass through; or
the third waypoint is a waypoint having a distance from a current location of the UE satisfying a second preset condition among one or more waypoints for the UE to plan to pass through, wherein the second preset condition is associated with a preset second threshold.

14. The method according to claim 13, wherein the protocol-agreed parameter comprises the time interval information, and the path information comprises at least one of:
location information of the third waypoint;
a waypoint index of the third waypoint;
the time interval information; or
time information corresponding to a start waypoint in a flight path of the UE.

15. The method according to claim 13, wherein the protocol-agreed parameter comprises the distance interval information, and the path information comprises at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

16. A method for information transmission, performed by a network device, comprising:
receiving path information of a user equipment (UE) sent by the UE according to a sending parameter, wherein the sending parameter comprises a sending configuration provided by the network device, or a protocol-agreed parameter.

17. The method according to claim 16, further comprising:
sending request information to the UE, wherein the request information comprises the sending configuration.

18. The method according to claim 16 or 17, wherein the sending configuration comprises:
location indication information of one or more alternative reference points configured to indicate a location of the one or more alternative reference points.

19. The method according to claim 18, wherein the path information comprises waypoint information of one or more first waypoints; and
the first waypoint is a waypoint having a shortest distance from a target reference point among one or more waypoints for the UE to plan to pass through, wherein the target reference point is one of the alternative reference points.

20. The method according to claim 19, wherein the waypoint information of the first waypoint comprises at least one of:
location information of the first waypoint;
time information for the UE to plan to pass through the first waypoint;
a waypoint index of the first waypoint;
location indication information of the target reference point having a shortest distance from the first waypoint; or
relative location information between the first waypoint and the target reference point.

21. The method according to claim 16 or 17, wherein the sending configuration comprises:
location indication information of one or more alternative reference points; and
one or more first thresholds,
wherein different alternative reference points correspond to same or different first thresholds.

22. The method according to claim 21, wherein the path information comprises waypoint information of one or more second waypoints; and
the second waypoint is a waypoint having a distance from the alternative reference point satisfying a first preset condition among one or more waypoints for the UE to plan to pass through, wherein the first preset condition is associated with the first threshold.

23. The method according to claim 22, wherein:
a distance between the second waypoint for the UE to plan to pass through and the one or more alternative reference points is less than or equal to a corresponding first threshold; or
a distance between the second waypoint for the UE to plan to pass through and the alternative reference point closest to the second waypoint is greater than or equal to a corresponding first threshold; or
one of distances of the second waypoint for the UE to plan to pass through and a previous waypoint adjacent to the second waypoint from a same alternative reference point is greater than a corresponding first threshold, and the other is less than or equal to the corresponding first threshold; or
one of distances of the second waypoint for the UE to plan to pass through and a next waypoint adjacent to the second waypoint from a same alternative reference point is greater than a corresponding first threshold, and the other is less than or equal to the corresponding first threshold.

24. The method according to claim 22 or 23, wherein the waypoint information of the second waypoint comprises at least one of:
location information of the second waypoint;
time information for the UE to plan to pass through the second waypoint;
a waypoint index of the second waypoint; or
location indication information of the alternative reference point having a distance from the second waypoint satisfying the first preset condition.

25. The method according to any one of claims 22 to 24, wherein the path information further comprises:
duration information indicating a duration for a distance between the one or more waypoints for the UE to plan to pass through and the alternative reference point satisfying the first preset condition.

26. The method according to any one of claims 18 to 25, wherein the location indication information of the alternative reference point comprises at least one of:
an index of the alternative reference point;
a cell identifier of the alternative reference point configured to indicate a cell corresponding to the alternative reference point, wherein the cell is a current serving cell, a neighboring cell of the current serving cell, or a specific cell of the UE; or
absolute location information of the alternative reference point.

27. The method according to claim 16, wherein the protocol-agreed parameter comprises one of:
time interval information configured to indicate a time interval between two adjacent sends of the path information; or
distance interval information configured to indicate a distance interval passed by the UE between two adjacent sends of the path information,
wherein the path information in different sends comprises waypoint information of different waypoints for the UE to plan to pass through.

28. The method according to claim 27, wherein the path information comprises waypoint information of a third waypoint; and
the third waypoint is a waypoint having a shortest of distance from a current location of the UE among one or more waypoints of the UE to plan to pass through; or
the third waypoint is a waypoint having a distance from a current location of the UE satisfying a second preset condition among one or more waypoints for the UE to plan to pass through, wherein the second preset condition is associated with a preset second threshold.

29. The method according to claim 28, wherein the protocol-agreed parameter comprises the time interval information, and the path information comprises at least one of:
location information of the third waypoint;
a waypoint index of the third waypoint;
the time interval information; or
time information corresponding to a start waypoint in a flight path of the UE.

30. The method according to claim 28, wherein the protocol-agreed parameter comprises the distance interval information, and the path information comprises at least one of:
time information for the UE to plan to pass through the third waypoint;
a waypoint index of the third waypoint;
the distance interval information;
a flight direction or a movement direction of the UE;
a flight speed or a movement speed of the UE; or
location information and/or time information corresponding to a start waypoint in a flight path of the UE.

31. An apparatus for information transmission, applied to a user equipment (UE), comprising:
an obtaining module configured to obtain a sending parameter, wherein the sending parameter comprises a sending configuration provided by a network device, or a protocol-agreed parameter; and
a sending module configured to send path information of the UE according to the sending parameter.

32. An apparatus for information transmission, applied to a network device, comprising:
a receiving module configured to receive path information of a user equipment (UE) sent by the UE according to a sending parameter, wherein the sending parameter comprises a sending configuration provided by the network device, or a protocol-agreed parameter.

33. A communication device, comprising a processor, a memory, and an executable program stored in the memory and capable of being run by the processor, wherein when running the executable program, the processor performs the method for information transmission according to any one of claims 1 to 30.

34. A computer storage medium storing an executable program that when executed by a processor, causes the method for information transmission according to any one of claims 1 to 30 to be implemented.
